## Europäisches Patentamt
## European Patent Office
## Office européen des brevets

(19)

(11) Veröffentlichungsnummer: **0 074 570**
**A2**

(12) # EUROPÄISCHE PATENTANMELDUNG

(21) Anmeldenummer: 82108092.6

(22) Anmeldetag: 02.09.82

(51) Int. Cl.³: **B 01 F 5/06**
**B 01 F 15/06**

(30) Priorität: 15.09.81 DE 3136589

(43) Veröffentlichungstag der Anmeldung:
23.03.83 Patentblatt 83 12

(84) Benannte Vertragsstaaten:
BE CH DE FR GB IT LI

(71) Anmelder: BAYER AG
Zentralbereich Patente, Marken und Lizenzen
D-5090 Leverkusen 1, Bayerwerk(DE)

(72) Erfinder: Göbel, Hartmut, Dipl.-Ing.
Ginsterweg 21
D-5090 Leverkusen(DE)

(72) Erfinder: Schulz, Nikolaus, Dr.
Hahnenweg 4
D-5000 Koeln 80(DE)

(72) Erfinder: Reichle, Lutz, Dr.
Kochsgut 21
D-5060 Bergisch Gladbach 3(DE)

(54) **Temperierbarer statischer Mischer und Reaktor.**

(57) Der Mischer bzw. Reaktor besteht im wesentlichen aus abwechselnd links- und rechtsdrehenden, schraubenförmig gewendelten und auf ein Kernrohr 8 gewickelten Rohrschlangen 7. Die Rohrschlangen 7 besitzen gleiche Ganghöhe, aber unterschiedlichen Wendeldurchmesser. Sie stehen an dem einen Ende der Vorrichtung mit einem Zuleitungsrohr 9 und an dem anderen Ende mit einem Ableitungsrohr für ein Temperiermittel in Verbindung. Die Rohrschlangenpackung ist von einem ebenfalls temperierbaren Doppelmantelgehäuse 1 umgeben. Durch die wendelförmigen Rohrschlangen wird der Produktstrom immer wieder umgelenkt und verteilt. Hierdurch ergibt sich einerseits eine gute Quervermischung und andererseits ein hochwirksamer Wärmeaustausch.

EP 0 074 570 A2

0074570

BAYER AKTIENGESELLSCHAFT     5090 Leverkusen 1, Bayerwerk
Zentralbereich
Patente, Marken und Lizenzen

## Temperierbarer statischer Mischer und Reaktor

Die Erfindung betrifft einen temperierbaren statischen Mischer bzw. Reaktor zur Durchführung von chemischen Reaktionen, insbesondere für hochviskose Medien. Der Mischer bzw. Reaktor beruht auf dem Prinzip der Mehrfachumlenkung eines Produktstromes bei gleichzeitigem Wärmeaustausch mit einem geeigneten Temperiermittel. Zu diesem Zweck ist ein rohrförmiges Doppelmantelgehäuse vorgesehen, in das röhrenförmige Elemente zur Mischung und zum Wärmeaustausch eingebaut sind, die von einem Temperiermittel durchströmt werden.

Derartige Vorrichtungen sind z.B. in den DE-OSen 23 64 500 und 28 39 564 beschrieben. Während bei dem Mischer gemäß der OS 23 64 500 die für den Wärmeaustausch wirksamen Flächen relativ klein sind und daher bei der Verwendung als Reaktor für exotherme Prozesse Schwierigkeiten auftreten können, bietet der Mischer gemäß OS 28 39 564 bei ausreichender Kühlfläche eine hohe Mischgüte sowie ein enges Verweilzeitspektrum, da er von vornherein als Reaktor für Polymerisationsreaktionen konzipiert ist. Auf der anderen Seite ist aber bei diesem Mischer der fertigungstechnische Aufwand relativ groß und die Handhabung nicht auf die Anforderungen der betrieblichen Praxis zugeschnitten (Einbau- und Reinigungsmöglichkeiten).

Le A 21 278

Hier setzt die Erfindung an. Es lag die Aufgabe zugrunde, einen als Reaktor verwendbaren temperierbaren statischen Mischer zu entwickeln, der mit seinen verfahrenstechnischen Eigenschaften (Mischgüte, Verweilzeitspektrum, Druckverlust, Wärmeaustausch) mit den bisher bekannten temperierbaren Mischern konkurrieren kann oder im Hinblick auf Teilaspekte sogar überlegen ist und andererseits eine kostengünstigere Herstellung und eine erleichterte Handhabung im Betrieb ermöglicht.

Erfindungsgemäß wird diese Aufgabe dadurch gelöst, daß die inneren Einbauten aus auf ein Kernrohr gewickelten, jeweils abwechselnd links- und rechtsdrehenden, schraubenförmig gewendelten Rohrschlangen gleicher Ganghöhe, aber mit unterschiedlichem Wendeldurchmesser bestehen, die an dem einen Ende der Vorrichtung mit einem Zuleitungsrohr und an dem anderen Ende mit einem Ableitungsrohr für das Temperiermittel verbunden sind.

Zuleitungs- und Ableitungsrohr sind vorzugsweise ringförmig ausgebildet und mit Anschlüssen für die Zu- bzw. Abführung des Temperiermittels versehen.

Gemäß einer bevorzugten Ausführung nehmen der Wendeldurchmesser und die Gangzahl der Rohrschlangen von innen nach außen derart zu, daß die Rohrschlangen den gesamten Querschnitt gleichmäßig ausfüllen, d.h. daß die Packungsdichte der Rohrschlangen über den Querschnitt konstant ist.

Der Steigungswinkel der Rohrschlangen beträgt vorteilhaft 30 bis 60° gegen die zentrale Achse.

Gemäß einer Weiterentwicklung ist das ringförmige Ableitungsrohr mit einem axial durch das Kernrohr zurückgeführten Sammelrohr verbunden, das in Höhe des ringförmigen Zuleitungsrohres mit einem Ablaufstutzen versehen ist.

Le A 21 278

Eine weitere Verbesserung besteht darin, daß die Einbauten einschließlich der Temperiermittelanschlüsse an den Ringleitungen (Zu- und Ableitungsrohre) an einem Flansch befestigt sind, der mit einem am Gehäuse angeordneten Flansch korrespondiert und dessen Innendurchmesser mit dem Innendurchmesser des Gehäuses übereinstimmt.

Mit der Erfindung sind folgende Vorteile verbunden:

1. Die Rohrschlangenpackung ist in strömungstechnischer Hinsicht günstig . Es sind an keiner Stelle seitliche Totzonen vorhanden. Die Packungsdichte kann in weiten Grenzen variiert und damit an die jeweilige Aufgabenstellung angepaßt werden. Die Gleichmäßigkeit der Packungsdichte stellt fertigungstechnisch kein Problem dar.

2. Das Schlangenrohrbündel besitzt eine sehr hohe mechanische Festigkeit.

3. Die Fertigung ist relativ einfach, da die einzelnen Rohre lediglich aufgewickelt werden.

4. Die Einbauten stützen sich nur auf den zentralen Zuführungs- und Abführungsrohren ab und können daher leicht montiert bzw. demontiert werden.

5. Der Einbau des Mischers mit Hilfe eines einzigen Flansches ermöglicht einen schnellen Ein- und Ausbau, z.B. für Reinigungszwecke. Außerdem können ohne Schwierigkeiten mehrere Mischereinheiten hintereinander geschaltet werden.

Le A 21 278

6. Die Anordnung der Rohrschlangen ermöglicht es, daß das Temperiermittel im reinen Kreuzgegenstrom zum Prozeßstrom geführt wird.

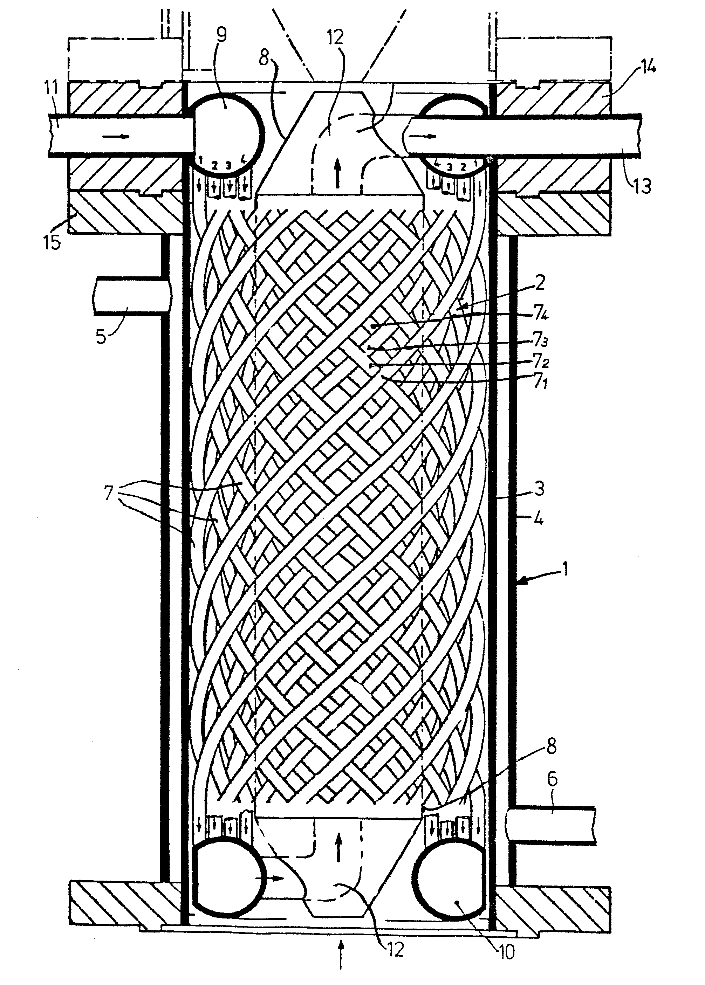

Im folgenden wird die Erfindung anhand eines in der Zeichnung dargestellten Ausführungsbeispieles näher erläutert. Der in der *Figur* dargestellte temperierbare Mischer besteht grundsätzlich aus einem rohrförmigen Doppelmantelgehäuse 1 und den darin befindlichen, vom Temperiermittel durchströmten Schlangenrohreinbauten 2. Der Zwischenraum zwischen dem Innenmantel 3 und dem Außenmantel 4 wird ebenfalls temperiert (Temperiermittelanschlüsse 5 und 6). Die Schlangenrohreinbauten 2 bestehen aus einer Vielzahl von links- und rechtsgängig drehenden, schraubenförmig gewendelten Metallrohren 7, die übereinander auf ein axiales Kernrohr 8 gewickelt sind. Zur Verdeutlichung sind vier aufeinanderfolgende Einzelrohre mit $7_1$ bis $7_4$ numeriert. Das oberste Rohr $7_1$ ist rechtsdrehend, das unmittelbar darunter liegende $7_2$ linksdrehend, das darauffolgende $7_3$ wieder rechtsdrehend und das darunter befindliche Rohr $7_4$ wieder linksdrehend usf. Man erkennt, daß der Wendeldurchmesser von innen nach außen immer weiter zunimmt, während die Ganghöhe für alle Rohrschlangen 7 gleich ist. Die Gangzahl der Rohrschlangen, d.h. die Zahl der Rohrschlangen, die jeweils konstanten Durchmesser haben, nimmt ebenfalls von innen nach außen zu. Durch passende Wahl der Gangzahl und des Wendeldurchmessers läßt sich erreichen, daß die Packungsdichte der Rohrschlangen 7 im gesamten Innenraum konsta:t ist. Der Steigungswinkel der Rohrschlangen zur Achse beträgt 30 bis 60° (hier ca. 45°). Die Rohr-

Le A 21 278

schlangen 7 münden am oberen Ende der Vorrichtung in ein ringförmiges Zuleitungsrohr 9 und am unteren Ende in ein ringförmiges Ableitungsrohr 10 für das Temperiermittel. Die Mittelachsen der Ringleitungen 9 und 10 liegen auf einem zum Gehäuse konzentrischen Kreis mit kleinerem Durchmesser. Die Ringleitung 9 ist mit einem nach außen geführten Anschluß 11 für das Temperiermittel verbunden. An die Ringleitung 10, d.h. an das Ableitungsrohr, ist ein Sammelrohr 12 angeschlossen, das im Inneren des Kernrohres 8 koaxial bis auf die Höhe der oberen Ringleitung 9 zurückgeführt ist und dort durch die Ringleitung 9 hindurch als Abfluß 13 für das Temperiermittel nach außen führt. Das Kernrohr 8 ist an beiden Enden verschlossen.

Die Rohrschlangen 7 bilden zusammen mit dem Kernrohr 8, den Rohrleitungen 9 und 10, dem Sammelrohr 12 und den Temperiermittelanschlüssen 11 und 13 eine kompakte Baueinheit, die an dem Flansch 14 befestigt ist. Der Flansch 14 kann mit dem am Gehäuse 1 befindlichen Gegenflansch 15 verschraubt werden. Auf diese Weise läßt sich der Mischer sehr leicht montieren bzw. demontieren. Außerdem können ohne Schwierigkeiten mehrere Einheiten hintereinandergeschaltet werden. In der Figur ist der Anfang der nächsten Einheit angedeutet (strichpunktiert).

### Betriebsweise

An den Anschlüssen 5 und 11 wird ein Temperiermittel,z.B. eine Kühlflüssigkeit, zugeführt. Die durch das Gehäuse strömende Kühlflüssigkeit fließt bei 6 wieder ab. Die bei 11 zugeführte Kühlflüssigkeit strömt durch das ringförmige Zuleitungsrohr 9 und verteilt sich gleich-

Le A 21 278

mäßig auf die Rohrschlangen 7. Nach dem Durchlauf der Kühlflüssigkeit durch das Mischpaket vereinigt sich die Flüssigkeit in dem ringförmigen Ableitungsrohr 1o und fließt durch das Sammelrohr 12 und den Stutzen 13 ab. Der für den Produktstrom maßgebende Querschnitt ist gleich dem Innenquerschnitt des Gehäuses 1 vermindert um den Querschnitt der Einbauten 7,8,9,1O. Der Produktstrom wird in der Fig. von unten nach oben, d.h. im Kreuzgegenstrom zum Temperiermittel, durch den Mischer hindurchgeführt. Durch die wendelförmigen Rohrschlangen wird der Produktstrom immer wieder umgelenkt und an den Kreuzungsstellen der Rohrschlangen zerteilt. Hierdurch ergibt sich eine gute Quervermischung. Aufgrund der großen Zahl von Rohrschlangen wird eine relativ große Fläche für den Wärmeaustausch bereitgestellt. Die Rohrschlangen sind auch in strömungstechnischer Hinsicht günstig, so daß sich der Druckverlust des Mischers in vernünftigen Grenzen hält. Diese günstigen Eigenschaften lassen den neuen Mischer als besonders geeignet zur Durchführung von exothermen Polymerisationsreaktionen erscheinen.

0074570

- 7 -

Patentansprüche:

1. Temperierbarer statischer Mischer bzw. Reaktor, insbesondere für viskose Medien, bestehend aus einem rohrförmigen Doppelmantelgehäuse (1) und darin befindlichen, röhrenförmigen Einbauten (7,8,9,10), die von einem Temperiermittel durchströmt werden, dadurch gekennzeichnet, daß die Einbauten aus auf ein Kernrohr (8) gewickelten, jeweils abwechselnd links- und rechtsdrehenden, schraubenförmig gewendelten Rohrschlangen (7) gleicher Ganghöhe, aber mit unterschiedlichem Wendeldurchmesser bestehen, die an dem einen Ende der Vorrichtung mit einem Zuleitungsrohr (9) und an dem anderen Ende mit einem Ableitungsrohr (10) für das Temperiermittel verbunden sind.

2. Vorrichtung nach Anspruch 1, dadurch gekennzeichnet, daß das Zuleitungsrohr (9) und das Ableitungsrohr (10) ringförmig sind und mit Anschlüssen (11 und 12,13) für die Zu- bzw. Abführung des Temperiermittels versehen sind.

3. Vorrichtung nach Anspruch 1 bis 2, dadurch gekennzeichnet, daß der Wendeldurchmesser und die Gangzahl der Rohrschlangen (7) von innen nach außen derart zunehmen, daß ihre Packungsdichte über den gesamten Querschnitt konstant ist.

4. Vorrichtung nach Anspruch 1 bis 3, dadurch gekennzeichnet, daß die Rohrschlangen eine Steigung von 30 bis 60$^\circ$ gegen die Achse aufweisen.

5. Vorrichtung nach Anspruch 1 bis 4, dadurch gekennzeichnet, daß das ringförmige Ableitungsrohr (10) mit einem axial durch das Kernrohr (8) zurückgeführten Sammelrohr (12) verbunden ist, das in Höhe des Flansches (14) mit dem Ablaufstutzen (13) versehen ist.

Le A 21 278

6) Vorrichtung nach Anspruch 1 bis 5, dadurch gekennzeichnet, daß die Einbauten (7,8,9,10) einschließlich der Temperiermittelanschlüsse (11,13) an einem Flansch (14) befestigt sind, der mit einem am Gehäuse (1) angeordneten Flansch (15) korrespondiert und dessen Innendurchmesser mit dem Innendurchmesser des Gehäuses (1) übereinstimmt.